# FASCICULE DE BREVET EUROPEEN

(11) **EP 2 755 530 B1**
(45) Date de publication et mention de la délivrance du brevet: **12.08.2015**
(21) Numéro de dépôt: 12759438.0
(22) Date de dépôt: 14.09.2012
(51) Int. Cl.: A47J 27/092, A47J 27/09

(54) **DISPOSITIF DE SÉCURITÉ POUR COUVERCLE DE CUISEUR À PRESSION**
SICHERHEITSVORRICHTUNG FÜR DEN DECKEL EINES DAMPFDRUCKKOCHTOPFS
SAFETY DEVICE FOR THE LID OF A PRESSURE COOKER

(30) Priorité: 15.09.2011 CN 201110273383
(43) Date de publication de la demande: 23.07.2014
(73) Titulaire: SEB S.A., 69130 Ecully (FR)
(72) Inventeur: LUO, Quan, Yuhuan Zhejiang 317604 (CN); JIN, Weiping, Yuhuan Zhejiang 317604 (CN); ZHENG, Zufu, Yuhuan Zhejiang 317604 (CN)
(74) Mandataire: Bourrières, Patrice
(86) Numéro de dépôt international: PCT/EP2012/068160
(87) Numéro de publication internationale: WO 2013/037976

(56) Documents cités:
- EP-A1- 1 582 122
- CN-Y- 2 275 415
- FR-A1- 2 446 623

## Description

La présente invention relève du domaine technologique des appareils de cuisine et concerne en particulier un dispositif de sécurité pour couvercle de cuiseur à pression.

Pour permettre une utilisation normale et en toute sécurité des cuiseurs à pression, les systèmes de verrouillage des couvercles des cuiseurs à pression actuels comportent un dispositif de sécurité. Lorsque le corps du cuiseur à pression et le couvercle ne sont pas correctement enclenchés, le dispositif de sécurité empêche l'augmentation de la pression à l'intérieur du cuiseur ; après utilisation du cuiseur à pression, lorsque l'on ouvre le couvercle, si de la pression subsiste à l'intérieur du cuiseur, le dispositif de sécurité empêche l'ouverture du couvercle.

Actuellement, il existe de nombreux types de dispositifs de sécurité pour les couvercles de cuiseurs à pression, et la manipulation de ces dispositifs de sécurité peut varier d'un type à l'autre ; ainsi par exemple, un brevet chinois présente une soupape de sécurité de couvercle de sûreté à deux lames de verrouillage pour cuiseur à pression (numéro de demande : 97208603.X ; numéro de publication: CN 2275415 Y), constituée d'une soupape flottante, d'une lame de verrouillage inférieure, d'une lame de verrouillage supérieure, d'un ressort, d'un bloc coulissant de lame de verrouillage supérieure, d'un bloc coulissant de lame de verrouillage supérieure, et d'un support de verrouillage ; le bloc coulissant de la lame supérieure vient s'insérer dans la rainure en forme de H de la poignée supérieure, et l'ensemble constitué de la lame de verrouillage supérieure, de la lame de verrouillage inférieure et du ressort est à son tour inséré dans la rainure de coulissement en forme de H de la poignée supérieure ; le bloc coulissant de la lame inférieure vient s'insérer dans l'orifice carré du support de verrouillage, puis l'ensemble constitué du bloc coulissant de la lame inférieure et du support de verrouillage est inséré dans la rainure en forme de H de la poignée supérieure, et l'ensemble est fixé à l'aide des deux crochets retournés du support de verrouillage. Si le couvercle n'est pas fermé correctement, les lames de verrouillage supérieure et inférieure provoquent une fermeture étanche et empêchent la soupape flottante de s'élever, la pression ne peut donc pas augmenter à l'intérieur du cuiseur. Au cours de l'utilisation du cuiseur à pression, si une pression assez élevée est présente à l'intérieur du cuiseur, la soupape flottante, sous l'action de la forte pression à l'intérieur du cuiseur, se trouve en position haute et le cuiseur est hermétiquement fermé ; ce n'est que lorsque la pression présente à l'intérieur du cuiseur a baissé que la soupape flottante est en position basse et qu'il est possible d'ouvrir le cuiseur. Il est ainsi possible d'éviter que ne surviennent des accidents corporels consécutifs à une ouverture en force du couvercle ou à une erreur de manipulation, de façon à assurer un bon niveau de sécurité au cuiseur à pression.

Cependant, la soupape de sécurité de couvercle de sûreté à deux lames de verrouillage pour cuiseur à pression comporte un nombre assez important de pièces, sa structure est relativement complexe, et l'installation de la lame de verrouillage supérieure, de la lame de verrouillage inférieure, du bloc coulissant de la lame de verrouillage supérieure et du bloc coulissant de la lame de verrouillage inférieure dans la poignée constitue une opération assez délicate. De plus, la fermeture étanche provoquée par les lames de verrouillage supérieure et inférieure empêche toute communication entre la soupape flottante et l'extérieur, la pression contenue à l'intérieur du cuiseur ne peut pas être correctement évacuée, il faut appliquer une force assez importante pour pouvoir fermer le couvercle, ce qui n'est pas pratique d'utilisation.

Le but de la présente invention est d'apporter une solution aux problèmes actuels décrits ci-dessus, et de fournir un dispositif de sécurité pour couvercle de cuiseur à pression de structure simple, pratique d'utilisation et présentant un niveau de sécurité élevé.

Le but de la présente invention peut être atteint par le biais de la solution technologique suivante :

Un dispositif de sécurité pour couvercle de cuiseur à pression qui comporte une poignée supérieure, un socle de soupape et une poignée inférieure fixée sur le corps du cuiseur ; ladite poignée supérieure est fixée sur le couvercle, et cette poignée supérieure comporte un orifice-traversant qui communique avec l'extérieur ; ledit socle de soupape est fixé sur le couvercle et ce socle de soupape est traversé par une tige de soupape d'arrêt qui peut se déplacer verticalement ; ladite tige de soupape d'arrêt comporte sur une extrémité intérieure qui se situe sous la face intérieure du couvercle, un orifice d'évacuation d'air qui communique avec l'orifice traversant ; ladite poignée supérieure comporte une plaque de poussée coulissante qui peut s'approcher ou s'éloigner du bord du couvercle du cuiseur; un ressort est agencé entre la plaque de poussée et la poignée supérieure, ledit ressort comprend une extrémité qui appuie contre la poignée supérieure et une autre extrémité qui appuie contre la plaque de poussée ; ladite plaque de poussée comporte une partie avant munie d'une encoche destinée à engager la tige de soupape d'arrêt; sous ladite encoche se trouve un épaulement de pression qui permet, à l'orifice d'évacuation d'air de la tige de soupape d'arrêt de communiquer sans interruption avec l'intérieur du cuiseur lorsque le couvercle se ferme ; sous l'encoche se trouve également une structure de positionnement qui permet de positionner la plaque de poussée par l'intermédiaire de la tige de soupape d'arrêt qui est soulevée en positon haute lorsque le couvercle est fermé.

Le principe de fonctionnement de ce dispositif de sécurité pour couvercle de cuiseur à pression est le suivant : lorsque l'on fait tourner la poignée supérieure pour fermer le couvercle, la plaque de poussée vient en butée contre le bord du couvercle et coulisse en s'éloignant du bord du cuiseur ; la tige de soupape d'arrêt, sous l'effet de la gravité, se trouve alors en position basse ; l'orifice d'évacuation d'air de la tige de soupape d'arrêt se trouve dans le corps du cuiseur ; la plaque de poussée fait coulisser l'épaulement de pression qui se trouve sous l'encoche de façon à ce que l'épaulement de pression fasse pression sur la tige de soupape d'arrêt pour que l'orifice de la tige de soupape d'arrêt communique sans interruption avec l'intérieur du cuiseur ; ce n'est que de cette façon que la pression qui se trouve à l'intérieur du cuiseur pendant la fermeture du couvercle peut être évacuée, ce qui permet de garantir la facilité de la fermeture du couvercle. Une fois le couvercle fermé, la plaque de poussée, sous l'action du ressort, revient en position en glissant vers le bord du cuiseur, la pression s'accumule à l'intérieur du cuiseur, la tige de la soupape d'arrêt s'élève, la structure de positionnement, en même temps que la tige de la soupape d'arrêt se met en position, positionne la plaque de poussée, de sorte que la plaque de poussée ne peut pas se déplacer lorsque de la pression se trouve dans le cuiseur, si bien qu'il n'est pas possible d'ouvrir le couvercle et que la sécurité d'ouverture du couvercle est assurée.

Dans le dispositif de sécurité pour couvercle de cuiseur à pression décrit ci-dessus, ladite tige de soupape d'arrêt comporte un anneau saillant I qui fait saillie de façon radiale ; ledit anneau saillant I se trouve dans le socle de soupape, et, ledit épaulement de pression vient faire pression contre la surface supérieure de l'anneau saillant I lors de la fermeture du couvercle.

Pendant le processus de fermeture du couvercle, la tige de soupape d'arrêt descend sous l'effet de la gravité ; la surface inférieure de l'anneau saillant I vient faire pression sur le socle de soupape et empêche la tige de soupape d'arrêt de continuer à descendre. Lors de la fermeture du couvercle, l'épaulement de pression vient faire pression sur la surface supérieure de l'anneau saillant I, ce qui empêche la tige de soupape d'arrêt de s'élever ; l'orifice d'évacuation d'air de la tige de soupape d'arrêt se trouve sous la face étanche du socle de soupape ; l'orifice d'évacuation d'air de la tige de soupape d'arrêt communique en permanence avec l'intérieur du corps du cuiseur, de sorte que, lors de la fermeture du couvercle, la pression qui se trouve à l'intérieur du corps du cuiseur peut être évacuée par l'orifice d'évacuation d'air, permettant ainsi de garantir la fermeture facile et sans effort du couvercle.

Dans le dispositif de sécurité pour couvercle de cuiseur à pression décrit ci-dessus, ladite structure de positionnement comporte des gradins de positionnement qui viennent s'appuyer contre la tige de soupape d'arrêt, ou une rainure de positionnement dans laquelle vient s'encastrer la tige de soupape d'arrêt.

Une fois le couvercle fermé, l'intérieur du corps du cuiseur contient de la pression, et celle-ci provoque l'élévation de la tige de soupape d'arrêt ; la tige de soupape d'arrêt vient alors faire pression contre les gradins de positionnement ou s'insérer dans la rainure de positionnement. La tige de soupape d'arrêt empêche le déplacement de l'encoche, ce qui permet de positionner la plaque de poussée, si bien que, lorsqu'il y a une pression assez importante à l'intérieur du corps du cuiseur, la plaque de poussée ne peut pas coulisser, il est alors impossible d'ouvrir le couvercle et la sécurité d'ouverture du couvercle est assurée.

Dans le dispositif de sécurité pour couvercle de cuiseur à pression décrit ci-dessus, une structure d'élévation est agencée entre ladite plaque de poussée et la tige de soupape d'arrêt, ladite structure d'élévation permet de faire en sorte que la tige de soupape d'arrêt s'élève lorsque la plaque de poussée s'approche du bord du couvercle.

Lorsque la plaque de poussée s'approche du bord du couvercle, la structure d'élévation fait s'élever la tige de soupape d'arrêt, de sorte qu'une petite partie de l'orifice d'évacuation d'air de la tige de soupape d'arrêt se trouve à l'intérieur du corps du cuiseur, ou que l'orifice d'évacuation d'air se trouve partiellement obstruée par la surface d'étanchéité du socle de soupape. Cela permet ainsi de réduire la surface d'évacuation d'air, et de réduire la course d'élévation de la tige de soupape d'arrêt. Dès lors, lorsqu'une infime pression est produite à l'intérieur du corps du cuiseur, la tige de soupape d'arrêt peut facilement, sous l'effet de la pression, s'élever pour rendre le couvercle étanche ; l'élévation de la tige de soupape d'arrêt se caractérise par une sensibilité élevée et une courte durée, ce qui permet d'éviter efficacement les pertes de chaleur et de pression à l'intérieur du corps du cuiseur, de réduire le temps de cuisson et la consommation d'énergie, et donc d'économiser de l'énergie.

Dans le dispositif de sécurité pour couvercle de cuiseur à pression décrit ci-dessus, ladite structure d'élévation comporte une glissière qui se trouve sur la partie supérieure de l'encoche et un anneau saillant Il qui se trouve au niveau de l'extrémité extérieure du la tige de soupape d'arrêt ; ledit anneau saillant Il se trouve sur la glissière, et ladite glissière s'élève progressivement vers le bord intérieur de l'encoche à partir de l'extrémité de l'encoche.

Lorsque, sous l'effet de l'élasticité du ressort, la plaque de poussée s'approche du bord du corps du cuiseur, l'anneau saillant Il s'élève progressivement le long de la glissière et provoque ainsi l'élévation de la tige de soupape d'arrêt.

Lors de la fabrication du dispositif, il peut y avoir une autre situation, dans laquelle dans le dispositif de sécurité pour couvercle de cuiseur à pression décrit ci-dessus, ladite structure d'élévation comporte un bloc de butée qui se trouve au-dessus de la rainure et un bloc d'élévation qui fait saillie de façon radiale et qui se trouve au niveau de l'extrémité extérieure de la tige de soupape d'arrêt ; la surface de contact entre ledit bloc d'élévation et le bloc de butée étant un plan incliné; ledit plan incliné est incliné vers le bas à partir du bord interne de l'encoche dans la direction de l'extrémité de ladite encoche.

Lorsque, sous l'effet de l'élasticité du ressort, la plaque de poussée s'approche du bord du corps du cuiseur, le bloc de butée entre en contact avec le plan incliné du bloc d'élévation, de sorte que le bloc d'élévation entraîne la tige de soupape d'arrêt qui s'élève.

Dans le dispositif de sécurité pour couvercle de cuiseur à pression décrit ci-dessus, la partie inférieure de l'extrémité postérieure de la plaque de poussée comporte un ergot de retenue; sous ladite poignée inférieure (4) se trouve une rainure de coulissement dans laquelle vient s'insérer l'ergot de retenue et qui permet d'orienter le coulissement de la plaque de poussée; ladite rainure de coulissement comporte une entrée de coulissement qui se trouve sur le côté de la poignée inférieure; l'extrémité de ladite entrée de coulissement est courbée en direction du corps du cuiseur et cette extrémité comporte une surface d'arrêt.

Lors de la fermeture du couvercle, l'ergot de retenue de la plaque de poussée pénètre dans la rainure de coulissement à partir de l'entrée de coulissement ; la plaque de poussée se déplace alors en étant guidée par la rainure de coulissement, et le bord retourné du corps du cuiseur n'entre pas en contact avec la plaque de poussée, ce qui permet de réduire la friction et de faciliter la fermeture du couvercle. La rainure de coulissement entraîne dans un premier temps la plaque de poussée dans un déplacement qui l'éloigne du bord du couvercle, puis guide la plaque de poussée dans un déplacement qui la rapproche du couvercle ; à ce moment-là, sous l'effet de l'élasticité du ressort, la plaque de poussée s'approche du bord du couvercle, et enfin, la surface d'arrêt empêche l'ergot de retenue d'avancer, de sorte que la plaque de poussée arrête de coulisser.

Dans le dispositif de sécurité pour couvercle de cuiseur à pression décrit ci-dessus, un ergot d'arrêt est agencé sous ladite plaque de poussée, ledit ergot d'arrêt se trouve placé entre un rebord du corps du cuiseur et le couvercle lorsque le couvercle et le corps du cuiseur ne sont pas correctement enclenchés

En cas d'erreur de manipulation, la position de l'ergot d'arrêt entre le rebord du corps du cuiseur et le couvercle fait qu'il demeure impossible de fermer le couvercle, ce qui permet d'éviter l'augmentation de la pression à l'intérieur du corps du cuiseur et donc de prévenir les risques.

Dans le dispositif de sécurité pour couvercle de cuiseur à pression décrit ci-dessus, le rebord du corps du cuiseur comporte un bord retourné vers l'extérieur ; ledit ergot d'arrêt se trouve sous ledit bord retourné lorsque le couvercle et le corps du cuiseur sont correctement enclenchés

Une fois que le couvercle a été correctement fermé et s'est enclenché, l'ergot d'arrêt de la plaque de poussée se trouve sous le bord recourbé, ce qui ne provoque aucune interférence avec la fermeture normale du couvercle ; en outre, l'ergot d'arrêt peut s'enclencher avec le bord retourné, ce qui améliore encore la sécurité.

Dans le dispositif de sécurité pour couvercle de cuiseur à pression décrit ci-dessus, sur ladite plaque de poussée se trouve une colonne de positionnement I et dans ladite poignée supérieure se trouve une colonne de positionnement Il ; les deux extrémités dudit ressort sont insérées respectivement sur la colonne de positionnement I et sur la colonne de positionnement II.

Ainsi, les deux extrémités du ressort sont étirées par la colonne de positionnement I et la colonne de positionnement II, le ressort ne risque pas de se détacher en cours d'utilisation, ce qui permet de garantir le fonctionnement normal du ressort et d'améliorer la stabilité de la plaque de poussée lorsqu'elle coulisse.

Par rapport aux technologies actuelles, la présente invention propose un dispositif de sécurité pour couvercle de cuiseur à pression qui présente les avantages suivants :
1. Sous l'encoche du dispositif de sécurité pour couvercle de cuiseur à pression se trouve un épaulement de pression ; lorsque l'on ferme le couvercle, l'épaulement de pression vient faire pression sur la tige de soupape d'arrêt, l'orifice d'évacuation d'air de la tige de soupape d'arrêt communique en permanence avec l'intérieur du corps du cuiseur, de sorte que la pression de l'air à l'intérieur du corps du cuiseur peut s'évacuer ; la fermeture du couvercle s'en trouve ainsi facilitée.
2. Sous l'encoche du dispositif de sécurité pour couvercle de cuiseur à pression se trouve une structure de positionnement ; ainsi, après la fermeture du couvercle, avec l'aide de la tige de soupape d'arrêt, la plaque de poussée peut être positionnée ; lorsqu'une pression relativement élevée s'est formée à l'intérieur du corps du cuiseur, la plaque de poussée ne peut plus coulisser, et il est dès lors impossible d'ouvrir le couvercle ; la sécurité du couvercle s'en trouve ainsi renforcée.
3. Dans le dispositif de sécurité pour couvercle de cuiseur à pression se trouve une structure d'élévation qui permet de provoquer l'élévation de la tige de soupape d'arrêt lorsque la plaque de poussée s'approche du bord du couvercle ; la superficie d'évacuation d'air se trouve ainsi réduite et la course d'élévation de la tige de soupape d'arrêt est raccourcie, de sorte que lorsqu'une pression peu importante est produite à l'intérieur du corps du cuiseur, la tige de la soupape d'arrêt, sous l'effet de la pression, peut facilement s'élever jusqu'à ce que le couvercle soit fermé de façon hermétique ; la sensibilité de l'élévation de la tige de soupape d'arrêt est élevée et la durée de cette élévation est courte, ce qui permet d'éviter efficacement les pertes de chaleur et de pression à l'intérieur du corps du cuiseur, de réduire le temps de cuisson et la consommation d'énergie, et donc d'économiser de l'énergie.
4. La mise en place d'un ergot de retenue dans le dispositif de sécurité pour couvercle de cuiseur à pression permet d'éviter que le bord retourné du corps du cuiseur n'entre en contact avec la plaque de poussée, réduisant ainsi la friction et facilitant la fermeture du couvercle.
5. La mise en place d'un ergot d'arrêt dans le dispositif de sécurité pour couvercle de cuiseur à pression permet d'éviter les risques en termes de sécurité en cas d'erreur de manipulation, et donc d'accroître le niveau de sécurité du couvercle.

La Figure 1 représente le schéma structurel en perspective du dispositif de sécurité pour couvercle de cuiseur à pression.
La Figure 2 représente le schéma structurel de la poignée inférieure et du corps du cuiseur faisant partie du dispositif de sécurité pour couvercle de cuiseur à pression.
La Figure 3 représente le schéma structurel de la plaque de poussée et de la tige de soupape d'arrêt faisant partie du dispositif de sécurité pour couvercle de cuiseur à pression.
La Figure 4 représente le schéma structurel de la plaque de poussée faisant partie du dispositif de sécurité pour couvercle de cuiseur à pression.
La Figure 5 représente le schéma structurel sous un angle différent de la plaque de poussée faisant partie du dispositif de sécurité pour couvercle de cuiseur à pression.
La Figure 6 représente le schéma structurel en coupe partielle avant fermeture du dispositif de sécurité pour couvercle de cuiseur à pression.
La Figure 7 représente le schéma structurel en coupe partielle en cours de fermeture du dispositif de sécurité pour couvercle de cuiseur à pression.
La Figure 8 représente le schéma structurel en coupe partielle après fermeture du dispositif de sécurité pour couvercle de cuiseur à pression.
La Figure 9 représente le schéma structurel en coupe partielle dans le mode de réalisation 2 du dispositif de sécurité pour couvercle de cuiseur à pression.

Sont donnés ci-dessous des modes de réalisation de la présente invention et, en s'appuyant sur les figures, des descriptions complémentaires sur la solution technologique de la présente invention, mais la présente invention ne se limite pas à ces modes de réalisation.

### Mode de réalisation 1

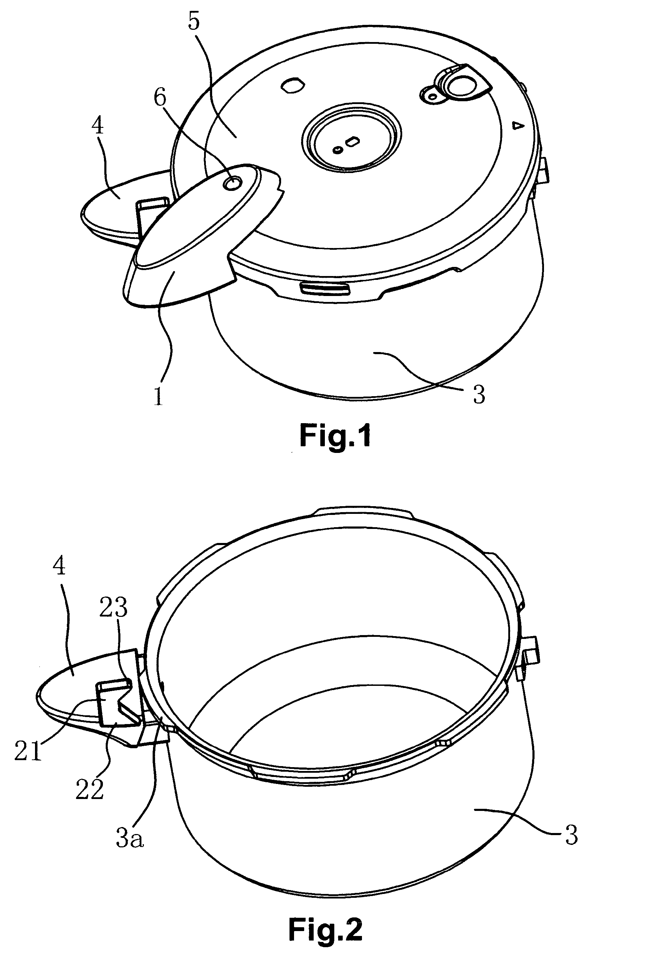

Ainsi que le montrent les figures 1, 2 et 6, le présent dispositif de sécurité pour couvercle de cuiseur à pression comporte une poignée supérieure (1), un socle de soupape (2) et une poignée inférieure (4) fixée sur le corps du cuiseur (3) ; au niveau de l'ouverture du corps du cuiseur (3) se trouve un bord retourné (3a) vers l'extérieur ; ladite poignée supérieure (1) est fixée sur le couvercle (5), et cette poignée supérieure (1) comporte un orifice traversant (6) qui communique avec l'extérieur ; ledit socle de soupape (2) est fixé sur le couvercle (5) et ce socle de soupape (2) est traversé par une tige de soupape d'arrêt (7) qui peut se déplacer verticalement ; sur l'extrémité intérieure de la tige de soupape d'arrêt (7), sous la face intérieure du couvercle (5), se trouve un orifice d'évacuation d'air (8) qui communique avec l'orifice traversant (6) ; dans ladite poignée supérieure (1) se trouve une plaque de poussée (9) coulissante qui peut s'approcher ou s'éloigner du bord du couvercle (5) du cuiseur ; entre la plaque de poussée (9) et la poignée supérieure (1) se trouve un ressort (10) dont une extrémité appuie contre la poignée supérieure (1) et l'autre extrémité appuie contre la plaque de poussée (9). Afin d'éviter que le ressort (10) ne se détache pendant la fermeture du couvercle et de garantir la stabilité de la plaque de poussée (9) pendant qu'elle coulisse, une colonne de positionnement I (25) est placée sur la plaque de poussée (9); la poignée supérieure (1) comporte une colonne de positionnement Il (26) et les deux extrémités du ressort (10) sont fixées respectivement sur la colonne de positionnement I (25) et sur la colonne de positionnement II (26).

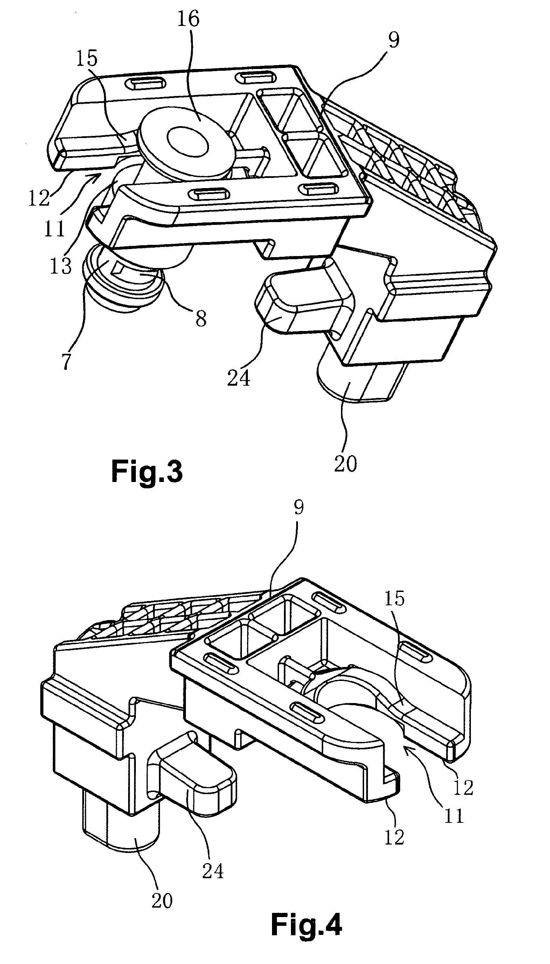

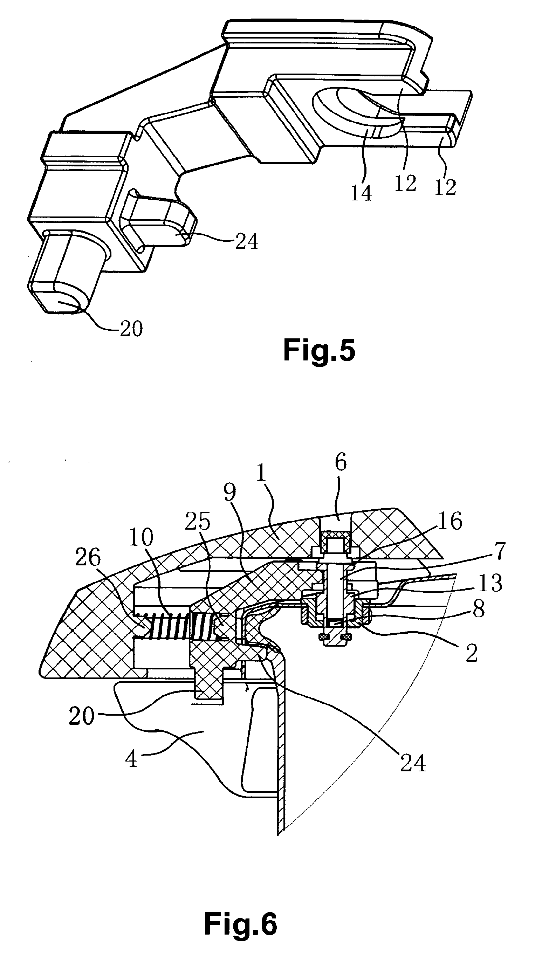

Ainsi que le montrent les figures 3 et 4, la plaque de poussée (9) comporte sur sa partie avant une encoche (11) destinée à recevoir la tige de soupape d'arrêt (7) ; sous ladite encoche (11) se trouve un épaulement de pression (12) qui permet, lorsque le couvercle est fermé, à l'orifice d'évacuation d'air (8) de la tige de soupape d'arrêt (7) de communiquer sans interruption avec l'intérieur du cuiseur (3). La tige de soupape d'arrêt (7) comporte un anneau saillant I (13) qui saille de façon radiale ; ledit anneau saillant I (13) se trouve dans le socle de soupape (2), et lorsque le couvercle est fermé, ledit épaulement de pression (12) vient faire pression contre la surface supérieure de l'anneau saillant I (13). Sous l'encoche (11) se trouve encore une structure de positionnement qui permet, lorsque le couvercle est fermé, le positionnement de la tige de soupape d'arrêt (7) par rapport à la plaque de poussée (9) au moment la tige s'élève. Ainsi que le montre la Figure 5, dans le présent mode de réalisation, sous l'encoche (11) se trouve une rainure de positionnement (14) dans laquelle vient s'encastrer la tige de soupape d'arrêt (7) ; selon les circonstances, la structure de positionnement peut aussi être constituée de gradins de positionnement se trouvant sous l'encoche (11) et qui viennent s'appuyer contre la tige de soupape d'arrêt (7) une fois que la tige de soupape d'arrêt s'est élevée.

Entre la plaque de poussée (9) et la tige de soupape d'arrêt (7) se trouve une structure d'élévation qui permet de faire en sorte que la tige de soupape d'arrêt (7) s'élève lorsque la plaque de poussée (9) s'approche du bord du couvercle (5). Dans le présent mode de réalisation, la structure d'élévation comporte une glissière (15) qui se trouve sur la partie supérieure de l'encoche (11) et un anneau saillant Il (16) qui se trouve au niveau de l'extrémité extérieure de la tige de soupape d'arrêt (7) ; l'anneau saillant Il (16) se trouve sur la glissière (15), et la glissière (15) s'élève progressivement vers l'intérieur à partir de l'extrémité de l'encoche (11).

Ainsi que le montrent les Figures 4 et 5, sur la plaque de poussée (9) se trouve un ergot d'arrêt (24) ; lorsque le couvercle (5) et le corps du cuiseur (3) ne sont pas correctement enclenchés, l'ergot d'arrêt (24) se trouve placé entre l'ouverture du corps du cuiseur (3) et le couvercle (5) ; en outre, lorsque le couvercle (5) et le corps du cuiseur (3) sont correctement enclenchés, l'ergot d'arrêt (24) se trouve sous le bord retourné (3a). La partie inférieure de l'extrémité postérieure de la plaque de poussée (9) comporte un ergot de retenue (20) ; comme l'indique la Figure 2, sous la poignée inférieure (4) se trouve une rainure de coulissement (21) dans laquelle vient s'insérer l'ergot de retenue (20) et qui permet d'orienter le coulissement de la plaque de poussée (9) ; la rainure de coulissement (21) comporte une entrée de coulissement (22) qui se trouve sur le côté de la poignée inférieure (4) ; l'extrémité de ladite entrée de coulissement (22) est courbée en direction du corps du cuiseur (3) et cette extrémité comporte une surface d'arrêt (23).

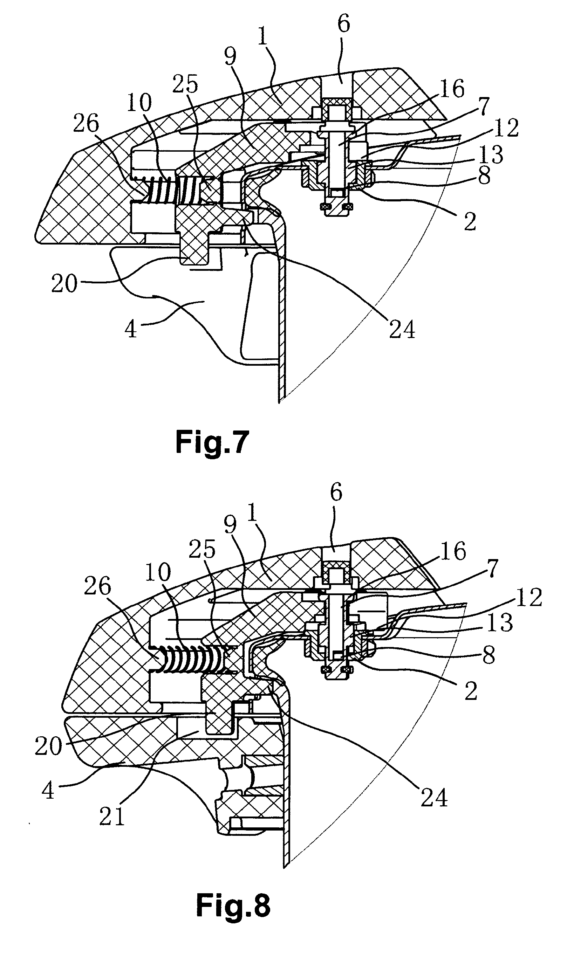

Le principe de fonctionnement du présent dispositif de sécurité pour couvercle de cuiseur à pression est le suivant : on commence par enclencher le couvercle (5) sur le corps du cuiseur (3) ; lorsque l'enclenchement entre le couvercle (5) et le corps du cuiseur (3) ne se fait pas correctement, l'ergot d'arrêt (24) se trouve placé entre l'ouverture du cuiseur et le couvercle (5), de sorte que le couvercle (5) ne peut pas s'enclencher, pour éviter que la pression à l'intérieur du corps du cuiseur (3) ne puisse augmenter, et éviter ainsi tout risque au niveau de la sécurité. Comme le montre la Figure 7, une fois que le couvercle (5) et le corps du cuiseur (3) se sont correctement enclenchés et que l'on fait tourner la poignée supérieure (1) pour fermer le couvercle, la plaque de poussée (9) entre en contact et est bloquée par le bord retourné (3a) du couvercle (5), de sorte que la plaque de poussée (9), malgré l'élasticité du ressort (10), coulisse en s'éloignant du bord retourné (3a) du couvercle (5) ; ensuite, l'ergot de retenue (20) de la plaque de poussée (9) entre dans la rainure de coulissement (21) par l'entrée de coulissement (22) ; à ce moment-là, le coulissement de la plaque de poussée (9) est dirigé par la rainure de coulissement (21) ; la rainure de coulissement (21) commence par guider la plaque de poussée (9) de façon à l'éloigner du bord du couvercle (5) ; le bord retourné (3a) du corps du cuiseur (3) n'entre pas en contact avec la plaque de poussée (9), ce qui réduit la friction et facilite le processus de fermeture du couvercle. Sous l'action de la gravité, la tige de soupape d'arrêt (7) s'abaisse, l'anneau saillant II (16) sur la tige de la soupape d'arrêt (7) s'abaisse en suivant la glissière (15) ; la face inférieure de l'anneau saillant I (13) vient s'appuyer contre le socle de soupape (2) et empêche ainsi que la tige de soupape d'arrêt (7) continue à s'abaisser ; l'orifice d'évacuation d'air (8) de la tige de soupape d'arrêt (7) se trouve sous le niveau de la surface d'étanchéité du socle de soupape (2), l'épaulement de pression (12) de la plaque de poussée (9) vient appuyer sur la surface supérieure de l'anneau saillant I (13), ce qui permet d'empêcher que la tige de soupape d'arrêt (7) ne s'élève, et de faire en sorte que l'orifice d'évacuation d'air (8) communique en permanence avec l'intérieur du corps du cuiseur (3). Ainsi, pendant la fermeture du couvercle, la pression à l'intérieur du corps du cuiseur (3) peut être évacuée par l'orifice d'évacuation d'air (8), de sorte que la pression à l'intérieur du corps du cuiseur (3) ne risque pas de dépasser la pression de sécurité, ce qui répond à l'exigence de sécurité de fermeture du couvercle et permet en même temps d'assurer une fermeture facile et sans effort.

Lorsque la surface d'enclenchement entre le couvercle (5) et le bord retourné (3a) du corps du cuiseur (3) dépasse 85 %, la rainure de coulissement (21) guide la plaque de poussée (9) de façon à ce qu'elle se déplace en direction du bord du couvercle (5) ; à ce moment-là, la plaque de poussée (9) est soumise à l'élasticité du ressort (10) et s'approche du bord retourné (3a) du couvercle (5) ; ensuite, la surface d'arrêt (23) empêche l'ergot de retenue (20) d'avancer, de sorte que la plaque de poussée (9) arrête de coulisser. Pendant que la plaque de poussée (9) s'approche du bord retourné (3a) du couvercle (5), l'épaulement de pression (12) se sépare progressivement de la surface supérieure de l'anneau saillant I (13), jusqu'à ne plus exercer aucune pression sur l'anneau saillant I (13) ; ensuite, l'anneau saillant II (16), en suivant la glissière (15) qui s'élève progressivement, s'élève à son tour, et fait ainsi s'élever la tige de soupape d'arrêt (7) ; ainsi que le montre la Figure 8, une fois que le couvercle (5) et le corps du cuiseur (3) se sont enclenchés, l'ergot d'arrêt (24) de la plaque de poussée (9) se trouve sous le bord retourné (3a) ; l'ergot d'arrêt (24) et le bord retourné (3a) peuvent s'enclencher, ce qui permet de renforcer encore la sécurité. À ce moment-là, l'orifice d'évacuation d'air (8) qui se trouve sur l'extrémité intérieure de la tige de soupape d'arrêt (7) se trouve au-dessus de la surface d'étanchéité du socle de soupape (2), ce qui permet de réduire la superficie d'évacuation d'air et de raccourcir la course d'élévation de la tige de soupape d'arrêt (7). Dès lors, lorsqu'une pression relativement petite s'est accumulée à l'intérieur du corps du cuiseur (3), la tige de soupape d'arrêt (7), sous l'effet de la pression, peut s'élever facilement jusqu'à ce que le joint d'étanchéité que possède la tige de soupape d'arrêt (7) entre en contact avec la surface d'étanchéité du socle de soupape (2) de façon à rendre le couvercle (5) étanche ; la sensibilité de l'élévation de la tige de soupape d'arrêt (7) est élevée et la durée de cette élévation est courte, ce qui permet d'éviter efficacement les pertes de chaleur et de pression à l'intérieur du corps du cuiseur, de réduire le temps de cuisson et la consommation d'énergie, et donc d'économiser de l'énergie. Par ailleurs, lorsque la tige de soupape d'arrêt (7) s'élève, l'extrémité supérieure de l'anneau saillant I (13) de la tige de soupape d'arrêt (7) s'encastre dans la rainure de coulissement (14), la tige de soupape d'arrêt (7) fait en sorte que l'encoche (11) ne peut pas coulisser, ce qui permet de réaliser le positionnement de la plaque de poussée (9). Dès lors, lorsqu'il y a une pression assez importante dans le corps du cuiseur (3), la plaque de poussée (9) ne peut pas coulisser, il est donc impossible d'ouvrir le couvercle ; ce n'est que lorsque la pression à l'intérieur du corps du cuiseur (3) est descendue à une valeur se trouvant dans la plage de pression permettant l'ouverture en toute sécurité que la tige de soupape d'arrêt (7) s'abaisse et qu'il est possible d'ouvrir le couvercle (5). C'est ainsi que la sécurité à l'ouverture du couvercle est garantie.

### Mode de réalisation 2

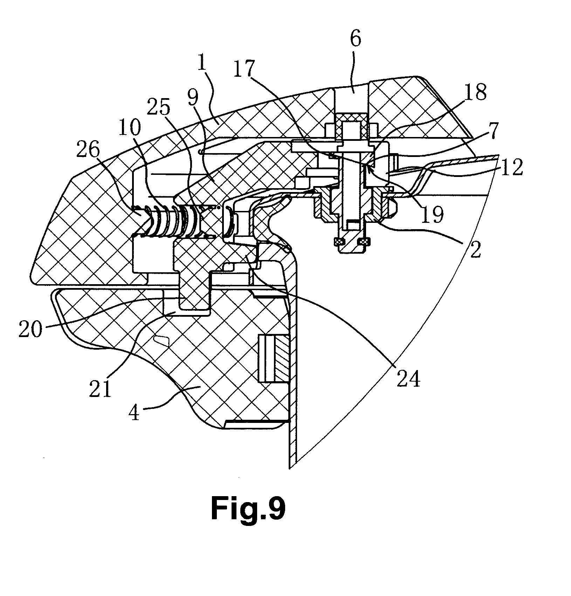

Ainsi que le montre la Figure 9, la structure et les principes de base du présent mode de réalisation sont similaires à ceux du mode de réalisation 1, la différence étant que dans le présent mode de réalisation, un bloc de butée (17) se trouve au-dessus de l'encoche (11) et un bloc d'élévation (18) saillant de façon radiale se trouve au niveau de l'extrémité extérieure de la tige de soupape d'arrêt (7) ; la face de contact entre le bloc de butée (17) et le bloc d'élévation (18) est un plan incliné (19) ; le plan incliné (19) s'incline vers le bas à partir du bord intérieur de l'encoche (11) vers l'extrémité. Lorsque, sous l'effet de l'élasticité du ressort (10), la plaque de poussée (19) s'approche du bord du corps du cuiseur (3), le bloc de butée (17) vient en butée contre le plan incliné (19) du bloc d'élévation (18) ; ainsi, l'élévation du bloc d'élévation (18) entraîne l'élévation de la tige de soupape d'arrêt (7) jusqu'à ce que l'orifice d'évacuation d'air (8) de la tige de soupape d'arrêt (7) se trouve au-dessus de la surface d'étanchéité du socle de soupape (2).

Les modes de réalisation décrits dans le présent document ne sont que des exemples illustrant l'esprit de la présente invention. Les techniciens du domaine technologique dont relève la présente invention peuvent apporter toutes sortes de modifications aux modes de réalisation exposés ici ou employer des méthodes de remplacement, sans pour autant s'éloigner de l'esprit de la présente invention ni sortir des limites des revendications énoncées ici.

## Revendications

1. Dispositif de sécurité pour couvercle de cuiseur à pression qui comporte une poignée supérieure (1), un socle de soupape (2) et une poignée inférieure (4) fixée sur le corps du cuiseur (3) ; ladite poignée supérieure (1) étant fixée sur le couvercle (5), et cette poignée supérieure (1) comportant un orifice traversant (6) qui communique avec l'extérieur ; ledit socle de soupape (2) étant fixé sur le couvercle (5) et ce socle de soupape (2) étant traversé par une tige de soupape d'arrêt (7) qui peut se déplacer verticalement ; ladite tige de soupape d'arrêt (7) comportant sur une extrémité intérieure qui se situe sous la face intérieure du couvercle (5), un orifice d'évacuation d'air (8) qui communique avec l'orifice traversant (6) ; ladite poignée supérieure (1) comportant une plaque de poussée (9) coulissante qui peut s'approcher ou s'éloigner du bord du couvercle (5) du cuiseur ; un ressort (10) étant agencé entre la plaque de poussée (9) et la poignée supérieure (1), ledit ressort (10) comprenant une extrémité qui appuie contre la poignée supérieure (1) et une autre extrémité qui appuie contre la plaque de poussée (9) ; **caractérisé en ce que** ladite plaque de poussée (9) comporte une partie avant munie d'une encoche (11) destinée à engager la tige de soupape d'arrêt (7) ; sous ladite encoche (11) se trouvant un épaulement de pression (12) qui permet, à l'orifice d'évacuation d'air (8) de la tige de soupape d'arrêt (7) de communiquer sans interruption avec l'intérieur du cuiseur (3) lorsque le couvercle se ferme; sous l'encoche (11) se trouvant également une structure de positionnement qui permet de positionner la plaque de poussée (9) par l'intermédiaire de la tige de soupape d'arrêt (7) qui est soulevée en positon haute lorsque le couvercle est fermé.

2. Dispositif de sécurité pour couvercle de cuiseur à pression selon la revendication 1, **caractérisé en ce que**, ladite tige de soupape d'arrêt (7) comporte un anneau saillant I (13) qui fait saillie de façon radiale ; ledit anneau saillant I (13) se trouvant dans le socle de soupape (2), et, ledit épaulement de pression (12) venant faire pression contre la surface supérieure de l'anneau saillant I (13) lors de la fermeture du couvercle.

3. Dispositif de sécurité pour couvercle de cuiseur à pression selon la revendication 2, **caractérisé en ce que** ladite structure de positionnement comporte des gradins de positionnement qui viennent s'appuyer contre la tige de soupape d'arrêt (7), ou une rainure de positionnement (14) dans laquelle vient s'encastrer la tige de soupape d'arrêt (7).

4. Dispositif de sécurité pour couvercle de cuiseur à pression selon l'une des revendications 1, 2 ou 3, **caractérisé en ce que**, une structure d'élévation est agencée entre ladite plaque de poussée (9) et la tige de soupape d'arrêt (7), ladite structure d'élévation permettant de faire en sorte que la tige de soupape d'arrêt (7) s'élève lorsque la plaque de poussée (9) s'approche du bord du couvercle (5).

5. Dispositif de sécurité pour couvercle de cuiseur à pression selon la revendication 4, **caractérisé en ce que** ladite structure d'élévation comporte une glissière (15) qui se trouve sur la partie supérieure de l'encoche (11) et un anneau saillant II (16) qui se trouve au niveau de l'extrémité extérieure du la tige de soupape d'arrêt (7) ; ledit anneau saillant II (16) se trouvant sur la glissière (15), et ladite glissière (15) s'élèvant progressivement vers le bord intérieur de l'encoche (11) à partir de l'extrémité de l'encoche (11).

6. Dispositif de sécurité pour couvercle de cuiseur à pression selon la revendication 4, **caractérisé en ce que** ladite structure d'élévation comporte un bloc de butée (17) qui se trouve au-dessus de la rainure (11) et un bloc d'élévation (18) qui fait saillie de façon radiale et qui se trouve au niveau de l'extrémité extérieure de la tige de soupape d'arrêt (7) ; la surface de contact entre ledit bloc d'élévation (18) et le bloc de butée (17) étant un plan incliné (19) ; ledit plan incliné (19) étant incliné vers le bas à partir du bord interne de l'encoche (11) dans la direction de l'extrémité de ladite ladite encoche (11).

7. Dispositif de sécurité pour couvercle de cuiseur à pression selon l'une des revendications 1, 2 ou 3, **caractérisé en ce que** la partie inférieure de l'extrémité postérieure de la plaque de poussée (9) comporte un ergot de retenue (20) ; sous ladite poignée inférieure (4) se trouvant une rainure de coulissement (21) dans laquelle vient s'insérer l'ergot de retenue (20) et qui permet d'orienter le coulissement de la plaque de poussée (9) ; ladite rainure de coulissement (21) comportant une entrée de coulissement (22) qui se trouve sur le côté de la poignée inférieure (4) ; l'extrémité de ladite entrée de coulissement (22) étant courbée en direction du corps du cuiseur (3) et cette extrémité comportant une surface d'arrêt (23).

8. Dispositif de sécurité pour couvercle de cuiseur à pression selon une des revendications 1, 2 ou 3, **caractérisé en ce que**, un ergot d'arrêt (24) est agencé sous ladite plaque de poussée (9), ledit ergot d'arrêt (24) se trouvant placé entre un rebord du corps du cuiseur (3) et le couvercle (5) lorsque le couvercle (5) et le corps du cuiseur (3) ne sont pas correctement enclenchés.

9. Dispositif de sécurité pour couvercle de cuiseur à pression selon la revendication 8, **caractérisé en ce que** le rebord du corps du cuiseur (3) comporte un bord retourné (3a) vers l'extérieur ; ledit ergot d'arrêt (24) se trouvant sous ledit bord retourné (3a) lorsque le couvercle (5) et le corps du cuiseur (3) sont correctement enclenchés

10. Dispositif de sécurité pour couvercle de cuiseur à pression selon l'une des revendications 1, 2 ou 3, **caractérisé en ce que**, sur ladite plaque de poussée (9) se trouve une colonne de positionnement I (25) et **en ce que** dans ladite poignée supérieure (1) se trouve une colonne de positionnement Il (26) ; les deux extrémités dudit ressort (10) étant insérées respectivement sur la colonne de positionnement I (25) et sur la colonne de positionnement II (26).

## Patentansprüche

1. Sicherheitsvorrichtung für Deckel eines Druckkochtopfes mit einem oberen Griff (1), einem Ventilsockel (2) und einem unteren Griff (4), der am Topfkörper (3) befestigt ist; wobei der obere Griff (1) am Deckel (5) befestigt ist und der obere Griff (1) mit einer Durchgangsöffnung (6) versehen ist, die mit der Außenseite verbunden ist; wobei der Ventilsockel (2) am Deckel (5) befestigt ist und der Ventilsockel (2) von einem Absperrventilschaft (7) durchquert wird, der sich vertikal bewegen kann; wobei der Absperrventilschaft (7) an einem inneren Ende unter der Innenseite des Deckels (5) mit einer Luftauslassöffnung (8) versehen ist, die mit der Durchgangsöffnung (6) verbunden ist; wobei der obere Griff (1) mit einer verschiebbaren Druckplatte (9) versehen ist, die sich dem Rand des Topfdeckels (5) nähern oder sich davon entfernen kann, einer Feder (10), die zwischen der Druckplatte (9) und dem oberen Griff (1) angeordnet ist, wobei die Feder (10) ein Ende umfasst, das gegen den oberen Griff (1) drückt, und ein anderes Ende, das gegen die Druckplatte (9) drückt; **dadurch gekennzeichnet, dass** die Druckplatte (9) einen vorderen Teil mit einer Aussparung (11) umfasst, die dazu bestimmt ist, den Absperrventilschaft (7) in Eingriff zu bringen; wobei sich unter der Aussparung (11) ein Druckabsatz (12) befindet, durch den die Luftauslassöffnung (8) des Absperrventilschafts (7) ununterbrochen mit dem Innern des Topfes (3) verbunden ist, wenn sich der Deckel schließt; wobei sich unter der Aussparung (11) zudem eine Positionierungsstruktur befindet, die die Positionierung der Druckplatte (9) mittels des Absperrventilschafts (7) ermöglicht, der beim Schließen des Deckels in die obere Stellung gebracht wird.

2. Sicherheitsvorrichtung für Deckel eines Druckkochtopfes nach Anspruch 1, **dadurch gekennzeichnet, dass** der Absperrventilschaft (7) mit einem vorspringenden Ring I (13) versehen ist, der radial herausragt, wobei sich der vorspringende Ring I (13) im Ventilsockel (2) befindet und der Druckabsatz (12) beim Schließen des Deckels Druck auf die obere Fläche des vorspringenden Rings I (13) ausübt.

3. Sicherheitsvorrichtung für Deckel eines Druckkochtopfes nach Anspruch 2, **dadurch gekennzeichnet, dass** die Positionierungsstruktur mit Positionierungsstufen, die sich gegen den Absperrventilschaft (7) drücken, oder mit einer Positionierungsrille (14) versehen ist, in die sich der Absperrventilschaft (7) einfügt.

4. Sicherheitsvorrichtung für Deckel eines Druckkochtopfes nach einem der Ansprüche 1, 2 oder 3, **dadurch gekennzeichnet, dass** eine Hebestruktur zwischen der Druckplatte (9) und dem Absperrventilschaft (7) angeordnet ist, wobei die Hebestruktur ein Anheben des Absperrventilschafts (7) bewirkt, wenn die Druckplatte (9) sich dem Rand des Deckels (5) nähert.

5. Sicherheitsvorrichtung für Deckel eines Druckkochtopfes nach Anspruch 4, **dadurch gekennzeichnet, dass** die Hebestruktur mit einer Führung (15), die sich auf dem oberen Teil der Aussparung (11) befindet, und einem vorspringenden Ring II (16) versehen ist, der sich auf Höhe des äußeren Endes des Absperrventilschafts (7) befindet; wobei sich der vorspringende Ring II (16) auf der Führung (15) befindet und die Führung (15), ausgehend vom Ende der Aussparung (11) allmählich in Richtung des inneren Rands der Aussparung (11) ansteigt.

6. Sicherheitsvorrichtung für Deckel eines Druckkochtopfes nach Anspruch 4, **dadurch gekennzeichnet, dass** die Hebestruktur einen Anschlagblock (17) über der Aussparung (11) und einen Hebeblock (18) umfasst, der radial herausragt und sich auf Höhe des äußeren Endes des Absperrventilschafts (7) befindet; wobei die Kontaktfläche zwischen dem Hebeblock (18) und dem Anschlagblock (17) eine geneigte Ebene (19) ist; wobei die geneigte Ebene (19) ausgehend vom inneren Rand der Aussparung (11) in Richtung des Endes der Aussparung (11) nach unten geneigt ist.

7. Sicherheitsvorrichtung für Deckel eines Druckkochtopfes nach einem der Ansprüche 1, 2 oder 3, **dadurch gekennzeichnet, dass** der untere Teil des hinteren Endes der Druckplatte (9) einen Haltenocken (20) umfasst; wobei sich unter dem unteren Griff (4) eine Führungsnut (21) befindet, in die der Haltenocken (20) eingesetzt wird und mit der die Bewegung der Druckplatte (9) gelenkt werden kann; wobei die Führungsnut (21) einen Führungseingang (22) umfasst, der sich an der Seite des unteren Griffs (4) befindet; wobei der Führungseingang (22) in Richtung des Topfkörpers (3) gekrümmt ist und dieses Ende über eine Anschlagfläche (23) verfügt.

8. Sicherheitsvorrichtung für Deckel eines Druckkochtopfes nach einem der Ansprüche 1, 2 oder 3, **dadurch gekennzeichnet, dass** ein Anschlagnocken (24) unter der Druckplatte (9) angeordnet ist, wobei der Anschlagnocken (24) zwischen einem Rand des Topfkörpers (3) und dem Deckel (5) platziert wird, wenn der Deckel (5) und der Topfkörper (3) nicht richtig eingerastet sind.

9. Sicherheitsvorrichtung für Deckel eines Druckkochtopfes nach Anspruch 8, **dadurch gekennzeichnet, dass** der Rand des Topfkörpers (3) einen nach außen umgeschlagenen Rand (3a) umfasst; wobei sich der Anschlagnocken (24) unter dem umgeschlagenen Rand (3a) befindet, wenn der Deckel (5) und der Topfkörper (3) richtig eingerastet sind.

10. Sicherheitsvorrichtung für Deckel eines Druckkochtopfes nach einem der Ansprüche 1, 2 oder 3, **dadurch gekennzeichnet, dass** die Druckplatte (9) einen Positionierzapfen I (25) umfasst und dass der obere Griff (1) einen Positionierzapfen II (26) umfasst; wobei die beiden Enden der Feder (10) auf den Positionierzapfen I (25) bzw. auf den Positionierzapfen II (26) gesetzt werden.

## Claims

1. Safety device for pressure cooker lid comprising an upper handle (1), a valve base (2) and a lower handle (4) attached to the body of the cooker (3); said upper handle (1) being attached to the lid (5), and this upper handle (1) having a through hole (6) communicating with the outside; said valve base (2) being attached to the lid (5) and this valve base (2) being traversed by a stop valve rod (7) which can move vertically; said stop valve rod (7) having on one inner end which is located under the inner side of the lid (5), an air evacuation hole (8) communicating with the through hole (6); said upper handle (1) having a sliding thrust plate (9) which can move towards or away from the edge of the lid (5) of the cooker; a spring (10) being arranged between the thrust plate (9) and the upper handle (1), said spring (10) having one end which presses against the upper handle (1) and another end which presses against the thrust plate (9); **characterised in that** said thrust plate (9) comprises a front part provided with a notch (11) for engaging the stop valve rod (7); a pressure shoulder (12) being located under said notch (11), allowing the air evacuation hole (8) of the stop valve rod (7) to communicate without interruption with the inside of the cooker (3) when the lid closes; a positioning structure is also located under the notch (11) to position the thrust plate (9) via the stop valve rod (7) which is raised into high position when the lid is closed.

2. Safety device for pressure cooker lid according to claim 1, **characterised in that** said stop valve rod (7) has a projecting ring I (13) projecting radially; said projecting ring I (13) being located in the valve base (2), and, said pressure shoulder (12) pressing against the upper surface of the projecting ring I (13) when closing the lid.

3. Safety device for pressure cooker lid according to claim 2, **characterised in that** said positioning structure comprises positioning steps which press against the stop valve rod (7), or a positioning groove (14) into which the stop valve rod (7) fits.

4. Safety device for pressure cooker lid according to one of claims 1, 2 or 3, **characterised in that** a lifting structure is arranged between said thrust plate (9) and the stop valve rod (7), said lifting structure designed to lift the stop valve rod (7) when the thrust plate (9) approaches the edge of the lid (5).

5. Safety device for pressure cooker lid according to claim 4, **characterised in that** said lifting structure comprises a slide (15) which is located on the upper part of the notch (11) and a projecting ring II (16) which is located at the outer end of the stop valve rod (7); said projecting ring II (16) being located on the slide (15) and said slide (15) rising gradually towards the inner edge of the notch (11) from the end of the notch (11).

6. Safety device for pressure cooker lid according to claim 4, **characterised in that** said lifting structure comprises a stop block (17) which is located above the groove (11) and a lifting block (18) which projects radially and which is located at the outer end of the stop valve rod (7); the contact surface between said lifting block (18) and the stop block (17) being an inclined plane (19); said inclined plane (19) being inclined downwards from the inner edge of the notch (11) towards the end of said notch (11).

7. Safety device for pressure cooker lid according to one of claims 1, 2 or 3, **characterised in that** the lower part of the rear end of the thrust plate (9) has a retaining pin (20); under said lower handle (4) there is a sliding groove (21) into which the retaining pin (20) is inserted and which guides the sliding of the thrust plate (9); said sliding groove (21) having a sliding entry (22) located on the side of the lower handle (4); the end of said sliding entry (22) being curved towards the body of the cooker (3) and this end comprising a stop surface (23).

8. Safety device for pressure cooker lid according to one of claims 1, 2 or 3, **characterised in that** a stop pin (24) is arranged under said thrust plate (9), said stop pin (24) being positioned between an edge of the body of the cooker (3) and the lid (5) when the lid (5) and the body of the cooker (3) are not properly engaged.

9. Safety device for pressure cooker lid according to claim 8, **characterised in that** the edge of the body of the cooker (3) has an upturned edge (3a) turned up towards the outside; said stop pin (24) being located under said upturned edge (3a) when the lid (5) and the body of the cooker (3) are properly engaged.

10. Safety device for pressure cooker lid according to one of claims 1, 2 or 3, **characterised in that**, on said thrust plate (9) there is a positioning column I (25) and **in that** in said upper handle (1) there is a positioning column II (26); both ends of said spring (10) being inserted respectively on the positioning column I (25) and on the positioning column II (26).
